(19) Europäisches Patentamt
European Patent Office
Office européen des brevets

(11) **EP 3 084 418 B1**

(12) **FASCICULE DE BREVET EUROPEEN**

(45) Date de publication et mention de la délivrance du brevet:
**10.10.2018 Bulletin 2018/41**

(21) Numéro de dépôt: **14827846.8**

(22) Date de dépôt: **15.12.2014**

(51) Int Cl.:
*G01N 29/14* (2006.01)        *B60C 23/00* (2006.01)
*G01H 1/12* (2006.01)        *G01N 29/44* (2006.01)
*G01N 29/46* (2006.01)

(86) Numéro de dépôt international:
**PCT/FR2014/053352**

(87) Numéro de publication internationale:
**WO 2015/092253 (25.06.2015 Gazette 2015/25)**

(54) **MÉTHODE DE DÉTECTION ACOUSTIQUE DE L'ÉTAT DE LA ROUTE ET DU PNEUMATIQUE**

AKUSTISCHE DETEKTIONSMETHODE FÜR DEN REIFEN- UND STRASSENZUSTAND

ACOUSTIC DETECTION METHOD FOR THE STATE OF A TIRE AND THE STATE OF A STREET

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.12.2013 FR 1362879**

(43) Date de publication de la demande:
**26.10.2016 Bulletin 2016/43**

(73) Titulaire: **Compagnie Générale des Etablissements Michelin**
**63000 Clermont-Ferrand (FR)**

(72) Inventeurs:
• **PATURLE, Antoine**
**F-63040 Clermont-Ferrand Cedex 9 (FR)**
• **ANTONI, Jérôme**
**F-63040 Clermont-Ferrand Cedex 9 (FR)**

(74) Mandataire: **Roussy, Delphine**
**Manufacture Française des Pneumatiques Michelin**
**CBS/CORP/J/PI - F35 - Ladoux**
**23, place des Carmes-Déchaux**
**63040 Clermont-Ferrand Cedex 9 (FR)**

(56) Documents cités:
**EP-A1- 2 573 594      JP-A- 2008 143 508**
**US-A- 5 586 028**

**Description**

L'invention concerne une méthode de détection de l'état de la route et du pneumatique équipant un véhicule se déplaçant sur cette route, à partir du bruit généré par le pneumatique lorsque celui-ci entre en contact avec le sol.

Il s'avère utile en effet de connaître à tout instant l'état de la route ou du pneumatique, pour interagir avec le conducteur ou avec les systèmes d'assistance à la conduite, de manière à les informer en temps réel de l'évolution des conditions de roulage, et plus généralement, de la modification possible des conditions d'adhérence du pneumatique et de la tenue de route du véhicule.

Ces méthodes ont donc pour objet de mettre en évidence l'évolution des conditions météorologiques telles que le passage entre des conditions de roulage sur sol sec, humide, mouillé, enneigé. Elles sont basées sur le constat que la fréquence et l'intensité sonores engendrées par le pneumatique varient lorsque l'état de la route change, et analysent des enregistrements sonores réalisés par des microphones disposés à proximité du pneumatique et de la route.

A partir de l'enregistrement d'un spectre fréquentiel des puissances sonores, on détermine l'état météorologique de la route à l'aide de ratios judicieusement choisis ou en comparant ce spectre à des données préenregistrées.

On observe toutefois que la précision et la fiabilité de toutes ces méthodes reposent en grande partie sur l'introduction de paramètres supplémentaires tels que la connaissance de la vitesse de roulage, de la température ou encore de la charge du véhicule, du degré d'usure ou du type de sculpture utilisé et, dans les méthodes les plus complexes, de l'enregistrement de l'état visuel de la route située en avant du véhicule. Il est donc nécessaire de combiner des informations en provenance de plusieurs capteurs, ce qui n'est pas sans incidences sur le coût de la mise en oeuvre des dispositifs proposés. Le document US 5 586 028 A divulgue la détermination de l'état de la route en utilisant la décomposition de la puissance sonore émise par bandes des fréquences et en traitant les données dans un réseau neural. La vitesse du véhicule est une donnée d'entrée de l'analyse.

L'invention a pour objet d'apporter une solution robuste à la problématique de détermination de l'état météorologique du sol. De manière complémentaire, la méthode proposée par l'invention permet également, de manière plus inattendue, de déterminer sur la seule base d'un enregistrement sonore, d'autres paramètres tels que le type de revêtement, le degré d'usure du pneumatique ou encore le type de sculpture utilisé.

Les enregistrements sonores sont réalisés à l'aide d'un microphone judicieusement placé sur le véhicule. La densité spectrale de la puissance sonore est répartie sur un intervalle de fréquence donné. Ce spectre varie en fonction d'un ensemble de modalités telles que les conditions météorologiques, l'état de la route, le degré d'usure du pneumatique, le type de sculpture du pneumatique, et dans une moindre mesure, la pression de gonflage, la charge etc. Une des modalités majeures susceptible de modifier ce spectre, toutes les conditions restant égales par ailleurs, est la vitesse du véhicule au moment où on effectue la mesure.

Il a été mis en évidence que cette variation pouvait être pratiquement neutralisée si, au lieu de considérer le spectre de puissance issu de la mesure, on recalcule ce spectre en "normalisant" les données mesurées à l'aide de la puissance sonore totale enregistrée pendant le temps de mesure sur l'ensemble de l'intervalle de fréquence. Ce qui a pour objet de gommer l'effet vitesse et de rendre la mesure sensiblement invariante à cette modalité.

L'invention a pour objet de tirer parti de cette observation.

La méthode de détermination de l'état d'une route et de l'état d'un pneumatique monté sur un véhicule se déplaçant sur ladite route selon l'invention comprend donc les étapes au cours desquelles :

- on enregistre une mesure d'un signal sonore produit par le pneumatique roulant sur une surface de la route pendant une trame temporelle donnée,
- on détermine une densité spectrale de puissance du signal sonore sur un intervalle de fréquence donné,
- on segmente l'intervalle de fréquence en une pluralité de bandes de fréquence de largeurs préalablement déterminées, et on associe à chaque bande de fréquence une donnée représentative d'une puissance sonore moyenne mesurée dans ladite bande de fréquence, les données représentatives issues d'une mesure formant des variables d'un vecteur associé à ladite mesure,
- on détermine un état de la route et du pneumatique correspondant au vecteur associé à la mesure réalisée, à l'aide d'une analyse discriminante des données fondée sur une base d'apprentissage formée d'un ensemble de vecteurs associés à des mesures préalablement enregistrées et réalisées, selon les mêmes étapes que ci-dessus, dans des conditions de roulage connues selon des modalités représentant chacune un état donné de la route et du pneumatique.

La méthode se caractérise en ce que les données représentatives formant les variables d'un vecteur associé à une mesure sont obtenues en faisant le ratio entre la puissance sonore moyenne mesurée dans une bande de fréquence et la puissance sonore totale mesurée sur tout l'intervalle de fréquence.

De la sorte, il n'est plus nécessaire de tenir compte de la vitesse, pour obtenir, à partir d'une seule mesure acoustique et sans qu'il soit nécessaire d'introduire des paramètres supplémentaires pour interpréter la mesure, des informations fiables sur l'état de la route et, comme on le verra également, sur l'état du pneumatique.

La méthode selon l'invention peut aussi comprendre isolément ou en combinaison les caractéristiques suivantes :

- La puissance sonore totale mesurée est égale à la somme des puissances sonores moyennes de toutes les bandes de fréquence de l'intervalle de fréquence considéré.
- Les bandes de fréquence sont déterminées en découpant l'intervalle de fréquence par tiers d'octave.
- La trame temporelle d'une mesure est inférieure ou égale à 0,5 secondes, et préférentiellement inférieure ou égale à 0,25 secondes.
- L'intervalle de fréquence est compris entre 0Hz et 20KHz
- L'intervalle de fréquence est compris entre 200Hz et 20KHz.
- Une classe de modalités "météo", formée par différents états météorologiques de la route, comprend un état sec, un état humide et un état mouillé.
- Une classe de modalités "état du revêtement", formée par différents états du revêtement de la route, comprend un état fermé, un état médium et un état ouvert.
- Une classe de modalités "usure", formée par différents états d'usure du pneumatique, comprend un état neuf, un état mi-usé et un état usé.
- Une classe de modalités "sculpture", formée par différents types de sculptures de pneumatiques, comprend une sculpture de type été et une sculpture de type hiver.
- L'analyse discriminante des données prévoit les étapes au cours desquelles :

  ◦ à partir de la base d'apprentissage, on détermine un espace discriminant réduit dans lequel on identifie des zones formées par chaque modalité ou combinaison de modalités,
  ◦ on transforme le vecteur associé à une mesure dans ledit espace discriminant réduit et, en fonction de la localisation dudit vecteur, on associe à la mesure une probabilité selon chacune des modalités ou des combinaisons de modalités,
  ◦ on détermine la modalité la plus probable selon chacune des classes de modalités.

- On associe à la mesure une modalité selon la modalité "état du revêtement", "usure" ou "sculpture", après avoir préalablement déterminé que la mesure a été effectuée sur une route sèche.
- On associe à la mesure une probabilité selon chacune des combinaisons de modalités contenant cette modalité, et on attribue à cette mesure la modalité de la classe ayant la plus forte probabilité.
- On réalise un diagnostic de l'état du pneumatique selon la modalité "usure" ou la modalité "sculpture" en combinant les résultats de mesures effectuées à des intervalles de temps différents.
- On mesure le signal sonore engendré par le pneumatique à l'aide d'un microphone placé dans la partie avant d'un passage de roue situé à l'arrière du véhicule.

L'invention sera mieux comprise à la lecture des figures annexées, qui sont fournies à titre d'exemples et ne présentent aucun caractère limitatif, dans lesquelles :

- La figure 1 représente un véhicule équipé d'un dispositif de mesure et d'analyse de la puissance sonore d'un pneumatique.
- La figure 2 représente un spectre de puissance sonore non "normalisé" pour des mesures réalisées à des vitesses différentes.
- La figure 3 représente le même spectre de puissance après "normalisation".
- La figure 4 représente les spectres moyens de puissance normalisés pour différents états météorologiques de la route.
- La figure 5 représente une répartition des mesures dans un espace discriminant réduit à deux dimensions selon l'état météorologique de la route.
- La figure 6 représente un diagramme fonctionnel des étapes de mise en oeuvre de la méthode selon l'invention.

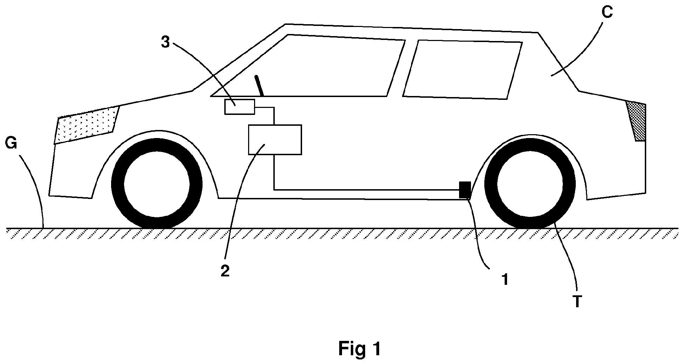

Le véhicule C roulant sur un sol G, représenté de manière schématique à la figure 1, comprend des passages de roue avant et arrière dans lesquels sont logées les roues équipées de pneumatiques T.

Lorsque le véhicule C se déplace, le pneumatique T génère un bruit dont l'amplitude et la fréquence dépendent de multiples facteurs. Cette pression sonore est en fait la superposition de bruits d'origines variées tels que les bruits engendrés par la mise en contact des pains de la sculpture avec le sol G, par les mouvements d'air entre les éléments de sculpture, par les particules d'eau soulevées par le pneumatique, ou encore par les écoulements d'air liés à la vitesse du véhicule. L'écoute de ces bruits se superpose également avec les bruits liés à l'environnement du véhicule tels que le bruit du moteur. Tous ces bruits sont également dépendants de la vitesse du véhicule.

Un moyen d'écoute, tel qu'un microphone 1 est installé dans un passage de roue pour écouter les bruits de roulement aussi près que possible du lieu où ils sont engendrés. Bien évidemment, les précautions d'usage sont prises pour protéger le microphone des agressions extérieures telles que les projections d'eau, de boue ou de gravillons. A cet effet, le microphone est préférentiellement installé à l'avant du passage de roue.

Idéalement, on peut considérer que l'installation d'un microphone dans chacun des passages de roue constitue le meilleur moyen de capter tous les bruits de roulage engendrés par les pneumatiques. Toutefois, pour déterminer l'état de la route (état météorologique et porosité du revêtement), un seul microphone est suffisant. Dans ce dernier cas, il est préférable de l'isoler des bruits aérodynamiques et du moteur.

Un bon choix semble être d'installer le microphone au niveau de la partie avant d'un des passages de roue de l'essieu arrière.

Il est également possible de placer le microphone dans le parechoc arrière voire dans le parechoc avant.

Le véhicule comprend également un calculateur 2, relié au microphone, et configuré pour exécuter les opérations permettant de mettre en forme et d'analyser, comme cela sera décrit en détails par la suite, l'information brute provenant du microphone, et d'estimer l'état du sol ou du pneumatique en fonction d'une mesure de la puissance sonore détectée par le microphone.

Des moyens de stockage de l'information sont associés au calculateur. Ces moyens permettent de conserver en mémoire les données relatives à un plan d'apprentissage concernant des mesures réalisées dans des conditions de roulage connues et selon des modalités décrivant des états différents de la route ou du pneumatique.

Enfin, les informations concernant l'état de la route ou du pneumatique peuvent être transmises à des moyens d'affichage ou à des systèmes d'assistance à la conduite 3, ou encore sur un serveur éloigné.

On entend ici par modalité, un ensemble de conditions liées à l'état du sol ou du pneumatique aptes à faire varier de manière sensible la mesure de la pression sonore.

Comme cela a été évoqué, le nombre de paramètres ayant un impact potentiel sur le bruit du pneumatique peut être important. Toutefois, il apparait que certains paramètres ont une influence faible ou de deuxième ordre sur la nature du bruit généré par le pneumatique. Cela peut être le cas par exemple de la pression interne du pneumatique ou encore de la charge du pneumatique.

De manière surprenante, il apparait que l'état météorologique de la route semble être un paramètre de premier ordre. Son impact sur le bruit du pneumatique est très important et surtout indépendant de tous les autres paramètres tels que l'état du revêtement de la route, l'état d'usure du pneumatique ou encore le type de sculpture du pneumatique. Ces autres paramètres sont aussi susceptibles dans une moindre mesure de faire varier le bruit de roulage pour autant que l'on sache discerner leurs signatures acoustiques propres.

L'état météorologique de la route forme une première classe de modalités, dite classe "météo", dans laquelle on différencie une route sèche d'une route humide, caractérisée par une hauteur d'eau affleurant les rugosités naturelles du revêtement de la route, ou d'une route mouillée pour laquelle la hauteur d'eau dépasse le niveau des rugosités naturelles du revêtement de la route. La connaissance en temps réel de l'évolution des conditions météorologiques de la route est d'une importance de premier ordre pour adapter, par exemple, les systèmes d'aide à la conduite.

On distingue aussi dans une seconde classe de modalités, dite classe "état du revêtement", différents états du revêtement de la route. Un revêtement est qualifié de revêtement fermé lorsqu'il prend un aspect lisse et sans rugosités, comme par exemple un bitume ayant ressué après avoir subi de fortes chaleurs. Un revêtement sera considéré comme ouvert, lorsque les rugosités sont importantes comme celles d'un revêtement usé ou celui d'une route de campagne réparée rapidement à l'aide d'un enduit superficiel réalisé par projection de cailloux sur du bitume. Un revêtement médium décrit tous les revêtements dans un état intermédiaire entre les deux états précédents et qualifie plus particulièrement les revêtements neufs. On suppose ici que la porosité du revêtement influence la perméabilité ou la réflexion sonore du bruit engendré par le pneumatique. En effet, le phénomène de pompage de l'air emprisonné entre le sol et la sculpture du pneumatique, ainsi que le phénomène d'amplification du bruit par le coin d'air formé par la courbure du pneumatique et le sol, sont d'autant plus prononcés que le revêtement de la route est fermé. La connaissance en temps réel de l'état d'une route peut s'avérer utile dans le cas où, par exemple, cette information est retournée par un grand nombre de véhicules ou une flotte de véhicules dédiés, vers un système centralisé de suivi et d'entretien du réseau routier.

Concernant l'état du pneumatique, il est possible de reconnaître l'état d'usure en distinguant, dans une troisième classe de modalités, dite classe "usure", l'état neuf, l'état usé, et un état intermédiaire considéré ici comme l'état du pneumatique à mi-usure. Une information de l'évolution dans le temps de la caractéristique d'usure, est également capitale, surtout si elle est couplée à l'information de l'état météorologique de la route. En effet, il est connu qu'un véhicule équipé de pneumatiques usés qui roule sur un revêtement mouillé risque plus facilement de perdre son adhérence (« aquaplaning ») que s'il avait des pneus neufs.

Enfin, la méthode selon l'invention est capable de discerner une quatrième classe de modalités, dite classe "sculpture" et relative au type de sculpture du pneumatique, en distinguant s'il s'agit d'une sculpture de type été d'une sculpture de type hiver. Ces deux types de pneumatiques se distinguent essentiellement par des bandes de roulement ayant des sculptures différentes, fortement entaillées et lamélisées dans le cas des sculptures hiver, plus directionnelles et moins entaillées dans le cas des sculptures été, ainsi que par la nature des matériaux formant la bande de roulement, plus tendre dans le cas des pneumatiques hiver, et plus dure dans le cas des pneumatiques été. Ces caractéristiques ne sont pas sans influence sur le comportement et la tenue de route du véhicule, et peuvent constituer une information utile pour adapter le système de conduite, en particulier dans les régions où les montes de pneumatiques alternent entre les périodes d'été et les périodes d'hiver.

La méthode selon l'invention permet de mettre en évidence chacune des modalités de ces différentes classes de manière isolée comme cela est le cas plus particulièrement pour la caractéristique météo ou de manière combinée pour les autres caractéristiques.

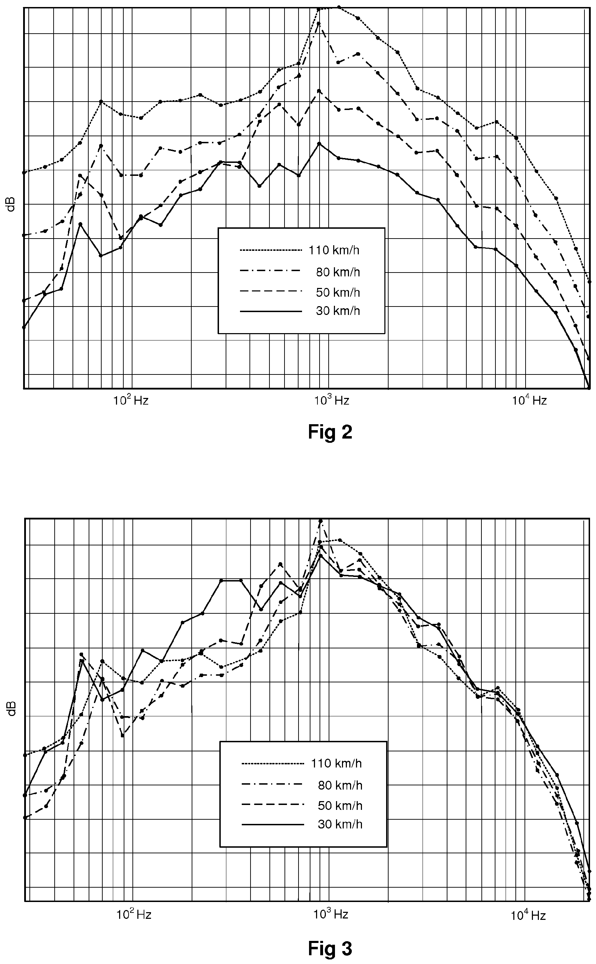

La figure 2 est une représentation spectrale de la puissance sonore enregistrée par le microphone pendant une trame temporelle. On entend ici par trame temporelle l'intervalle de temps, généralement court, pendant lequel on effectue un enregistrement sur la base duquel sont établies les données servant de base à une mesure. Cette trame temporelle est inférieure ou égale à 0,5 secondes ou idéalement inférieure ou égale à 0,25 secondes.

Cette représentation spectrale représente la puissance sonore reçue (en dB) en fonction de la fréquence, sur un intervalle de fréquence donné, typiquement ici, l'intervalle de fréquence audible, compris entre 0 Hz et 20 KHz.

Plus spécifiquement la représentation spectrale de la figure 2 est obtenue en décomposant l'intervalle de fréquence en bandes de fréquence de largeurs prédéterminées, et en affectant à chaque bande de fréquence une valeur caractéristique égale à la puissance moyenne mesurée dans cette bande de fréquence. Un découpage de l'intervalle de fréquence par bandes de tiers d'octave semble être le plus approprié. Ainsi, chaque point de chacune des courbes de la figure 2 représente une puissance sonore moyenne pour une bande de fréquence donnée et mesurée pendant une trame temporelle dans des conditions de roulage dans lesquelles, toutes choses égales par ailleurs, on ne fait varier que la vitesse (typiquement de 30kmh à 110kmh).

On observe alors que les courbes représentant les puissances spectrales sont décalées les unes par rapport aux autres, et que la puissance sonore totale dissipée augmente en fonction de la vitesse. Pour autant la forme générale des courbes reste similaire.

Cette observation se reproduit lorsque l'on change une ou plusieurs modalités des autres classes et que l'on compare les courbes obtenues en ne faisant varier que le seul paramètre vitesse.

On détermine alors la puissance sonore totale sur l'ensemble de l'intervalle de fréquence, qui peut être assimilée à la surface comprise entre la courbe et l'axe des abscisses et, pour chaque bande de fréquence, on divise la puissance moyenne observée dans cette bande de fréquence pendant une trame temporelle donnée, par la puissance totale enregistrée pendant cette trame temporelle sur tout l'intervalle de fréquence. Cela revient en quelque sorte à "normaliser" la mesure.

On observe alors à la figure 3 que les courbes obtenues préalablement, se recouvrent sensiblement et ont des profils très proches, en particulier dans les bandes de fréquences les plus élevées et les plus représentatives des phénomènes sonores décrits précédemment.

Cette "normalisation" permet de neutraliser l'effet lié à la vitesse, sans pour autant modifier de manière sensible la capacité d'analyse qu'il est possible de produire à partir d'un enregistrement sonore pendant une trame temporelle déterminée.

Cet avantage peut s'avérer décisif lorsque l'on ne souhaite pas relier le calculateur 2 à des moyens d'évaluation de la vitesse du véhicule, et que l'on désire obtenir des informations sur l'état de la route ou du véhicule de manière autonome.

Par souci de simplification et de rapidité dans l'exécution des calculs, on peut considérer que la puissance totale est égale à la somme des puissances moyennes dans chacune des bandes de fréquence de l'intervalle de fréquence considéré.

Chacun des points de la courbe de la figure 3 est une valeur représentative de la puissance sonore moyenne dans une bande de fréquence donnée. L'ensemble de ces points peut alors constituer un vecteur dans un espace vectoriel comprenant autant de dimensions que de bandes de fréquences. Dans l'exemple servant de support à la présente description, on obtient un vecteur comprenant 21 dimensions en considérant un intervalle de fréquence segmenté par tiers d'octave et compris dans l'intervalle de fréquence situé entre 200Hz et 20KHz. On observera au passage que la somme des valeurs formant les coordonnés d'un vecteur est égale à 1.

Le choix de l'intervalle de fréquence peut lui aussi être adapté selon que l'on souhaite éliminer totalement le bruit généré par le moteur dont l'amplitude maximale est comprise entre 50Hz et 60Hz, auquel cas on considérera un intervalle de fréquence compris par exemple entre 200Hz et 20KHz, ou si l'on désire conserver la part d'information pertinente contenue dans la gamme de fréquence inférieure à 200Hz, auquel cas on prendra en compte le spectre sur tout l'intervalle compris entre 0Hz et 20KHz.

L'enregistrement de la puissance sonore pendant une trame de temps peut être fait à partir d'un échantillonnage à haute fréquence (autour de 40 kHz) du signal sonore.

La mise en oeuvre de l'invention comprend une phase d'apprentissage préalable, au cours de laquelle on effectue un grand nombre de mesures en faisant varier de manière connue les modalités décrites ci-dessus, et décrivant l'état météorologique, l'état de la route, l'état d'usure ou le type de sculpture du pneumatique. A chacune de ces mesures, on affecte un vecteur obtenu dans les conditions décrites ci-dessus. On constitue de la sorte une base d'apprentissage spécifique à un véhicule.

Les méthodes d'analyse et de traitement statistiques des données sont connues en soi et ne font pas l'objet de cette invention. La méthode d'analyse discriminante linéaire qui a été utilisée a permis d'obtenir des résultats fiables et robustes.

Une première étape de cette méthode consiste à déterminer les axes factoriels principaux qui permettent de réduire le nombre de dimensions au nombre juste nécessaire pour décrire les vecteurs affectés à chacune des mesures selon des axes orthogonaux. Le passage de l'espace vectoriel dont le nombre de dimensions est égal au nombre de bandes de fréquences, typiquement égal à 21 dimensions, dans l'espace discriminant réduit se fait à l'aide d'une transformation linéaire.

Une deuxième étape consiste alors, à l'aide de l'analyse discriminante proprement dite à rechercher, dans cet espace discriminant réduit les zones dans lesquelles se situent les mesures obtenues pendant la phase d'apprentissage selon une modalité unique donnée ou selon une combinaison de modalités.

On entend ici par combinaison de modalités un état représentatif d'une mesure donnée réalisée selon une modalité choisie dans chacune des classes. A titre d'exemple une mesure réalisée à l'état "mouillé", sur une route "fermée" avec un pneumatique "été" et "usé" représente la combinaison de modalité "mouillé-fermée-été-usé". Le nombre de modalités combinées est donc égal au produit du nombre de modalités de chacune des classes.

Puis, on calcule dans cet espace discriminant réduit le centre de gravité de la zone dans laquelle sont situés les points représentant une modalité ou une combinaison de modalités, ainsi qu'un intervalle de confiance représentatif de la dispersion des points d'une même zone par rapport à ce centre de gravité.

Dans l'exemple servant de support à la présente description, la diminution du nombre de dimensions entre l'espace discriminant de départ et l'espace discriminant réduit permet de passer de 21 dimensions à environ 15 dimensions. Cette faible réduction permet d'observer que c'est la prise en compte de la forme totale du spectre qui est caractéristique de l'expression des différentes modalités. Et de laisser penser que la prise en compte des puissances d'un nombre réduit de bandes de fréquence ne permet pas de faire ressortir une modalité particulière concernant la route ou le pneumatique, à l'exception des modalités liées à l'état météorologique de la route.

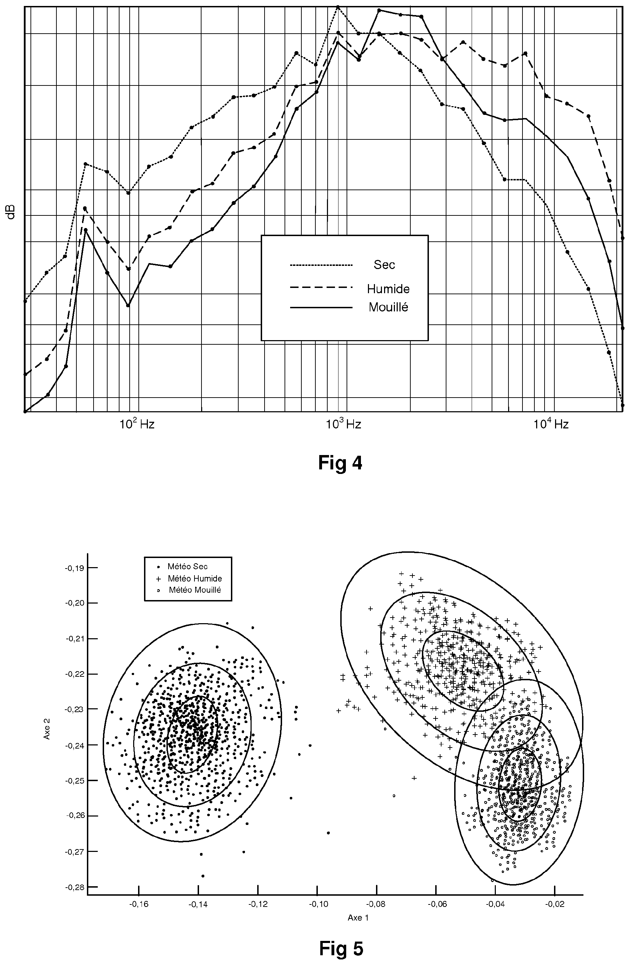

La figure 4, représente la répartition spectrale de la puissance sonore "normalisée", par bandes de fréquence de 1/3 d'octave pour trois états météorologiques de la route, toutes les modalités des autres classes étant égales par ailleurs.

La figure 5 permet de visualiser dans un espace à deux dimensions la répartition des mesures selon une des modalités "sec", "humide", "mouillé" de la classe "météo" de la route.

Une première observation permet de constater que les mesures réalisées sur un sol sec sont ne se recouvrent pas avec les mesures réalisées sur sol humide ou mouillé. Une seconde observation, permet de conclure qu'il est possible de déterminer l'état météorologique de la route de manière indépendante des modalités des autres classes avec une bonne robustesse.

Les ellipses entourant chacun des nuages de points sont placées à un, deux et trois écarts types, et permettent d'évaluer la dispersion des mesures autour du centre de gravité, et surtout d'apprécier le taux de recouvrement d'une zone par rapport à une autre qui est représentatif du risque d'affectation à tort à une autre modalité d'une mesure réalisée selon une modalité donnée différente.

A partir de ces données, il est également possible de déterminer la probabilité d'appartenance d'une nouvelle mesure à une des trois modalités de la classe "météo" de la route en évaluant la distance de ce point au centre de gravité de chacune de ces modalités.

Le tableau 1 donne les probabilités de classification de l'état météorologique de la route selon l'une des trois modalités "sec", "humide", "mouillé".

Tableau 1

| Pj/i | J = Sec | J=Humide | J=Mouillé |
|---|---|---|---|
| i=Sec | 1 | 0 | 0 |
| i=Humide | 0 | **0,91** | 0,09 |
| i=Mouillé | 0 | 0,03 | **0,97** |

On obtient, comme on le voit, des probabilités suffisamment élevées pour conclure que le véhicule roule sur une route "sèche", "humide" ou "mouillée". Et seule la reconnaissance de la modalité "humide" peut faire l'objet d'une attribution à tort à la modalité "mouillé" dans 9% des cas.

De même, il serait possible de déterminer l'état du revêtement de la route, avec une moindre robustesse que l'état météo de la route, sans qu'il soit nécessaire de connaître préalablement l'état du pneumatique. Toutefois, on préférera réaliser cette analyse lorsque la route est sèche. Cette observation suggère que certains phénomènes acoustiques liés à la porosité et à la réflexion du sol sont indépendants de la nature du pneumatique.

En revanche, en faisant des analyses similaires, on constate que les zones abritant les vecteurs relatifs aux modalités liées à l'état du pneumatique (usure ou sculpture) sont relativement dispersées et s'interpénètrent fortement (forte dispersion autour du centre de gravité, et faible éloignement des centres de gravité) ce qui ne permet pas de conclure à une modalité précise sans un risque élevé de détermination à tort, en particulier lorsque l'état de la route est "humide" ou "mouillé".

Aussi, pour assurer une bonne robustesse, la méthode prévoit de faire une première analyse de l'état météorologique de la route et, lorsqu'il est observé que le véhicule roule sur un sol "sec", de procéder à une deuxième analyse permettant de discerner les modalités relatives au revêtement de la route, à l'état d'usure du pneumatique et au type de sculpture du pneumatique.

Pour plus de robustesse, il semble alors préférable de faire l'analyse discriminante en s'appuyant sur les modalités combinées des trois classes. On localise dans l'espace discriminant réduit les nuages de points représentatifs des vecteurs et des mesures réalisées selon une combinaison donnée de modalités choisies dans chacune des trois classes de modalité "état du revêtement", "usure", "sculpture".

Les modalités liées à la sculpture du pneumatique sont notées "A" pour un pneumatique "hiver" et "P" pour un pneumatique "été", les modalités de l'état d'usure sont notées "N" pour un pneumatique "neuf", "M" pour un pneumatique "mi-usé" et "U" pour un pneumatique "usé", et enfin, les modalités de l'état du revêtement sont notées "f" pour la modalité "fermée", "m" pour la modalité "médium" et "o" pour la modalité "ouverte". Les 18 modalités combinées sont alors notées respectivement : ANf, ANm, ANo, AMf, AMm, AMo, AUf, AUm, AUo, PNf, PNm, PNo, PMf, PMm, PMo, PUf, PUm, PUo.

Le tableau 2 donne les probabilités obtenues à partir des résultats de mesures contenus dans la base d'apprentissage, pour chacune des 18 combinaisons de modalités. La dispersion des mesures, observée pour les modalités seules, est alors beaucoup plus faible pour les modalités combinées et permet de procéder à une classification de manière plus efficace.

Tableau 2

| | ANf | ANm | ANo | AMf | AMm | AMo | AUf | AUm | AUo | PNf | PNm | PNo | PMf | PMm | Pmo | PUf | PUm | PUo |
|---|---|---|---|---|---|---|---|---|---|---|---|---|---|---|---|---|---|---|
| ANF | **0,9** | 0,02 | | 0,03 | | | 0 | | | | | | | | | | | |
| ANm | | **0,99** | | | 0,01 | | | | | | | | | | | | | |
| ANo | | | **0,96** | | | | | | | | | 0 | | | | | | |
| AMf | | | | **0,95** | | | 0 | | | 0 | | | | | | | | |
| AMm | | | 0,01 | | **0,95** | | | 0,01 | | | | | | 0,01 | | | 0,03 | |
| AMo | | | 0,03 | | | **0,96** | | | | | | | | | | | | |
| AUf | | | | | | | **1** | | | | | | | | | | | |
| AUm | | | | | 0,01 | | | **0,97** | | | | | | 0,01 | | | 0,01 | |
| AUo | | | | | | | | | **0,91** | | | | | | | | | 0,1 |
| PNf | | | | | | | 0 | | | **1** | | | | | | 0 | | |
| PNm | | 0,01 | | | | | | | | | **0,97** | | | 0,02 | | | | |
| PNo | | | | | | | | | | | | **1** | | | | | | |
| Pmf | | | | | | | | | | | | | **1** | | | 0 | | |
| PMm | | 0,01 | | | 0,02 | | | | | | 0,01 | | | **0,96** | | | | |
| PMo | | | | | | | | | | | | | | | **1** | | | |
| PUf | | | | | | | | | | | | | 0 | | | **1** | | |
| PUm | | | | | | | | 0,06 | | | | | | 0,03 | | | **0,91** | |
| PUo | | | | | | 0,03 | | | 0,1 | | | | | | | | | **0,9** |

EP 3 084 418 B1

La probabilité globale de détection d'une des combinaisons de modalité est de l'ordre de 0,96.

L'étape suivante consiste à reconnaître, pour une nouvelle mesure donnée, la modalité de chacune des classes "état du revêtement", "usure" et "sculpture" dans laquelle la mesure a été effectuée.

Le tableau 3 permet de déterminer les probabilités de détection de la modalité d'une des trois classes en fonction des combinaisons de modalités.

Ce tableau 3 indique que, si une mesure est affectée à la classe "AUf" (Hiver, Usé revêtement fermé), on peut avoir une bonne confiance dans la détermination de la sculpture (1), de l'état d'usure (U) et de l'état du revêtement (1). Une relative moins bonne confiance est obtenue dans la classe "AUo" (Hiver, Usé, ouvert) pour laquelle la prédiction sur le type de sculpture pneumatique est moins bonne (0,91).

Tableau 3

| Classe trouvée | Probabilité de détection de la classe | | |
|---|---|---|---|
| | Sculpture | Usure | Revêtement |
| ANf | 1 | 0,95 | 0,98 |
| ANm | 1 | 0,99 | 1 |
| ANo | **0,96** | **1** | **1** |
| AMf | **0,98** | **0,95** | **1** |
| AMm | 0,97 | 0,96 | 1 |
| AMo | 0,99 | 0,96 | 0,99 |
| AUf | 1 | 1 | 1 |
| AUm | 0,98 | 0,98 | 1 |
| AUo | 0,91 | 1 | 1 |
| PNf | 0,98 | 0,95 | 1 |
| PNm | 0,99 | 0,98 | 1 |
| PNo | 1 | 1 | 1 |
| PMf | 1 | 0,97 | 1 |
| PMm | 0,97 | 0,98 | 1 |
| PMo | 1 | 1 | 1 |
| PUf | 1 | 0,97 | 1 |
| PUm | 0,94 | 0,97 | 1 |
| PUo | 0,87 | 0,97 | 1 |

A partir de la base d'apprentissage, on localise les zones dans lesquelles sont situées les modalités combinées dans l'espace discriminant réduit, ainsi que leur centre de gravité et leur dispersion. Typiquement, dans le cas de la présente description, on localise dans l'espace discriminant réduit, les 18 zones des 18 modalités combinées considérées.

Puis, à partir de la localisation du vecteur associé à chaque nouvelle mesure et transformé dans l'espace vectoriel réduit, on détermine pour chacune des modalités d'une classe, une probabilité pour chacune des combinaisons de modalité contenant cette modalité, et on attribue à cette mesure la modalité de la classe ayant la plus forte probabilité.

Ainsi, si la classe météo trouvée est "sec", les 21 variables du vecteur issu de la mesure permettent, en s'appuyant sur l'analyse discriminante basée sur la base d'apprentissage de déterminer une probabilité d'appartenance à une des modalités combinées, selon la classe "état du revêtement", la classe "usure" ou la classe "sculpture", soit typiquement, dans le cas servant de support à la présente description, la probabilité d'appartenance à une des 18 classes de modalités combinées : ANf, ANm, ANo, AMf, AMm, AMo, AUf, AUm, AUo, PNf, PNm, PNo, PMf, PMm, PMo, PUf, PUm, PUo. Cette probabilité se calcule par exemple en évaluant une distance par rapport au centre de gravité de la classe de modalité combinée considérée.

La probabilité d'appartenance de la mesure à une des modalités d'une classe particulière, autre que la classe météo, s'effectue alors à l'aide d'un second calcul de probabilité dénommé modèle "sculpture+usure+revêtement sur sol sec" de la manière suivante.

La probabilité de la modalité état du revêtement "fermé" est déduite de la relation

$$p(\text{revêtement} = \text{"fermé"}) = p (\text{« fermé »}) = p(ANf) + p(AMf) + p(AUf) + p(PNf) + p(PMf) + p(PUf)$$

De même, on déduit :

$$p(\text{revêtement} = \text{"médium"}) = p(\text{"médium"}) = p(ANm) + p(AMm) + p(AUm) + p(PNm) + p(PMm) + p(PUm),$$

$$p(\text{revêtement} = \text{"ouvert"}) = p(\text{"ouvert"}) = p(ANo) + p(AMo) + p(AUo) + p(PNo) + p(PMo) + p(PUo).$$

On cherche alors celle des trois probabilités qui est maximum et qui donne la modalité de l'état du revêtement détecté et la probabilité associée :

$$p(\text{revêtement}) = \max [p(\text{"fermé"}), p(\text{"médium"}), p(\text{"ouvert"})]$$

De même, p(sculpture = max [p("Hiver"), p("Eté")] avec :

$$p(\text{sculpture} = \text{"Hiver"}) = p(\text{"Hiver"}) = p(ANf) + p(ANm) + p(ANo) + p(AMf) + p(AMm) + p(AMo) + p(AUf) + p(AUm) + p(AUo)$$

$$p(\text{sculpture} = \text{"Eté"}) = p(\text{"Eté"}) = p(PNf) + p(PNm) + p(PNo) + p(PMf) + p(PMm) + p(PMo) + p(PUf) + p(PUm) + p(PUo).$$

Enfin, l'usure est donnée par p(usure = max [p("neuf"), p("mi-usé"), p("usé")] avec :

$$p(\text{usure} = \text{"neuf"}) = p (\text{"neuf"}) = p(ANf) + p(ANm) + p(ANo) + p(PNf) + p(PNm) + p(PNo),$$

$$p(\text{usure} = \text{"mi-usé}) = p (\text{mi-usé"}) = p(AMf) + p(AMm) + p(AMo) + p(PMf) + p(PMm) + p(PMo)$$

et,

$$p(\text{usure} = \text{"usé"}) = p (\text{"usé "}) = p(AUf) + p(AUm) + p(AUo) + p(PUf) + p(PUm) + p(PUo).$$

La probabilité d'affectation à une modalité issue d'une mesure donnée est alors confrontée à un seuil déterminé pour décider de la validité du résultat trouvé et de sa transmission à un système d'affichage ou d'assistance à la conduite. A titre d'exemple, toutes les détections dont la probabilité de classement n'est pas au moins égale à 0.75 sont rejetées. Et si cette probabilité est comprise entre 0.95 et 0.75, le résultat issu de la mesure doit être confirmé par une ou plusieurs mesures suivantes.

On observera ici que, à l'inverse de l'état météorologique ou de l'état du revêtement de la route qui peuvent évoluer brusquement et qui nécessitent des prises de décision rapides, l'évolution de l'usure ou le type de sculpture du pneumatique sont des facteurs beaucoup plus stables dans le temps, typiquement sur des échelles de temps correspondant à des distances parcourues de 100 kilomètres voire de 1000 kilomètres. Cependant comme la détection de ces paramètres pneumatique dépend de l'état de la route, on arrive au paradoxe qu'il faut pouvoir les détecter quasiment aussi rapidement que l'état de la route.

On peut réduire fortement la probabilité d'une détermination à tort sur ces deux critères en cumulant les observations obtenues à l'aide de plusieurs mesures consécutives, avant de décider de l'état d'usure réel ou du type de sculpture de pneumatique monté sur le véhicule.

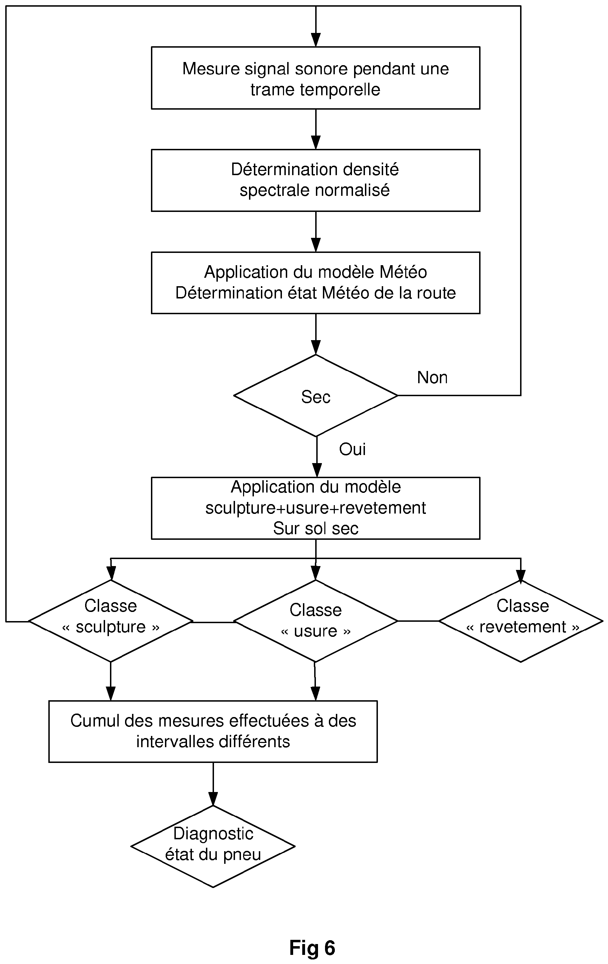

La figure 6 donne la séquence des opérations mises en oeuvre dans la méthode selon l'invention.

Après avoir effectué la mesure du spectre fréquentiel de la puissance sonore sur une trame de temps donnée, typiquement pendant 1/4 de seconde, on découpe le spectre en bandes de largeurs connues, typiquement en 1/3 d'octaves, sur un intervalle de fréquence donné, typiquement de 200Hz à 20KHz. L'échantillonnage de la mesure, pendant la trame de temps de 0,25 seconde, est fait à une fréquence de 44100 KHz.

A l'aide d'une transformation linéaire on fait passer le vecteur normalisé issu de la mesure, de l'espace à 21 dimensions dans un espace discriminant réduit. On détermine alors directement l'état météorologique de la route et, si on constate que la route est dans la modalité "sec" on détermine les probabilités d'association de la mesure à chacune des modalités combinées et on en déduit successivement le type de sculpture du pneumatique, l'usure du pneumatique et l'état du revêtement de la route en appliquent le modèle sculpture+usure+revêtement sur sol sec.

Le cumul des résultats relatifs à l'état du pneumatique peut alors être déterminé avec une bonne robustesse en cumulant les résultats des mesures effectuées à des intervalles de temps réguliers, de manière à transmettre un diagnostic de l'état du pneumatique et de l'état de la route à un moyen d'affichage ou à un système d'assistance à la conduite ou vers une unité de surveillance de l'état des routes.

L'invention permet donc de déterminer de manière robuste et sur la base d'une seule mesure d'intensité sonore réalisée pendant une trame de temps courte, l'état météorologique de la route ainsi que, de manière plus inattendue, l'état du revêtement de la route ou du pneumatique en s'affranchissant de la connaissance de la vitesse du véhicule.

Les modes de réalisation de l'invention servant de base à la présente description ne sont pas limitatifs, et peuvent faire l'objet de variantes de mise en oeuvre, en particulier dans le choix des méthodes d'analyse numérique des données, pour autant qu'ils permettent d'obtenir les effets techniques tels que décrits et revendiqués.

## Revendications

1. Méthode de détermination de l'état d'une route (G) et de l'état d'un pneumatique (T) monté sur un véhicule (C) se déplaçant sur ladite route, comprenant les étapes au cours desquelles :

   - on enregistre une mesure d'un signal sonore produit par le pneumatique roulant sur une surface de la route pendant une trame temporelle donnée,
   - on détermine une densité spectrale de puissance du signal sonore sur un intervalle de fréquence donné,
   - on segmente l'intervalle de fréquence en une pluralité de bandes de fréquence de largeurs préalablement déterminées, et on associe à chaque bande de fréquence une donnée représentative d'une puissance sonore moyenne mesurée dans ladite bande de fréquence, les données représentatives issues d'une mesure formant des variables d'un vecteur associé à ladite mesure,
   - on détermine un état de la route et du pneumatique correspondant au vecteur associé à la mesure réalisée, à l'aide d'une analyse discriminante des données fondée sur une base d'apprentissage formée d'un ensemble de vecteurs associés à des mesures préalablement enregistrées et réalisées, selon les mêmes étapes que ci-dessus, dans des conditions de roulage connues selon des modalités représentant chacune un état donné de la route et du pneumatique,

   **caractérisée en ce que** les données représentatives formant les variables du vecteur associé à une mesure sont obtenues en faisant le ratio entre la puissance sonore moyenne mesurée dans une bande de fréquence et une puissance sonore totale mesurée sur tout l'intervalle de fréquence.

2. Méthode selon la revendication 1, dans laquelle la puissance sonore totale mesurée est égale à la somme des puissances sonores moyennes de toutes les bandes de fréquence de l'intervalle de fréquence considéré.

3. Méthode selon la revendication 1 ou la revendication 2, dans laquelle les bandes de fréquence sont déterminées en découpant l'intervalle de fréquence par tiers d'octave.

**4.** Méthode selon l'une des revendications 1 à 3, dans laquelle la trame temporelle d'une mesure est inférieure ou égale à 0,5 secondes, et préférentiellement inférieure ou égale à 0,25 secondes.

**5.** Méthode selon l'une des revendications 1 à 4, dans laquelle l'intervalle de fréquence est compris entre 0Hz et 20KHz

**6.** Méthode selon l'une des revendications 1 à 4, dans laquelle l'intervalle de fréquence est compris entre 200Hz et 20KHz.

**7.** Méthode selon l'une des revendications 1 à 6, dans laquelle une classe de modalités "météo", formée par différents états météorologiques de la route, comprend un état sec, un état humide et un état mouillé.

**8.** Méthode selon l'une des revendications 1 à 7, dans laquelle une classe de modalités "état du revêtement", formée par différents états du revêtement de la route, comprend un état fermé (f), un état médium (m) et un état ouvert (o).

**9.** Méthode selon l'une des revendications1 à 8, dans laquelle une classe de modalités "usure", formée par différents états d'usure du pneumatique, comprend un état neuf (N), un état mi-usé (M) et un état usé (U).

**10.** Méthode selon l'une des revendications1 à 9, dans laquelle une classe de modalités "sculpture", formée par différents types de sculptures de pneumatiques, comprend une sculpture de type été (P) et une sculpture de type hiver (A).

**11.** Méthode selon l'une des revendications 1 à 10, dans laquelle l'analyse discriminante des données prévoit les étapes au cours desquelles :

- à partir de la base d'apprentissage, on détermine un espace discriminant réduit dans lequel on identifie des zones formées par chaque modalité ou combinaison de modalités,
- on transforme le vecteur associé à une mesure dans ledit espace discriminant réduit et, en fonction de la localisation dudit vecteur, on associe à la mesure une probabilité selon chacune des modalités (sec, humide, mouillé, fermé (f), ouvert (o), médium (m), usé(U), mi-usé (M), neuf (N), été (P), hiver (A)) ou des combinaisons de modalités (ANf, ANm, ANo, AMf, AMm, AMo, AUf, AUm, AUo, PNf, PNm, PNo, PMf, PMm, PMo, PUf, PUm, PUo),
- on détermine la modalité la plus probable selon chacune des classes de modalités ("météo", "état du revêtement", "usure", "sculpture").

**12.** Méthode selon la revendication 11, dans laquelle on associe à la mesure une modalité selon la modalité "état du revêtement", "usure" ou "sculpture", après avoir préalablement déterminé que la mesure a été effectuée sur une route sèche.

**13.** Méthode selon la revendication 12 dans laquelle :

- pour chacune des modalités d'une classe, on associe à la mesure une probabilité selon chacune des combinaisons de modalités contenant cette modalité,
- on attribue à cette mesure la modalité de la classe ayant la plus forte probabilité.

**14.** Méthode selon la revendication 13, dans laquelle on réalise un diagnostic de l'état du pneumatique selon la modalité "usure" ou la modalité "sculpture" en combinant les résultats de mesures effectuées à des intervalles de temps différents.

**15.** Méthode selon l'une des revendications 1 à 14, dans laquelle on mesure le signal sonore engendré par le pneumatique (T) à l'aide d'un microphone (1) placé dans la partie avant d'un passage de roue situé à l'arrière du véhicule (C).

**Patentansprüche**

**1.** Verfahren zur Bestimmung des Zustands einer Straße (G) und des Zustands eines Reifens (T), der auf einem Fahrzeug (C) montiert ist, das auf der Straße fährt, umfassend die folgenden Schritte, während derer:

- eine Messung eines von dem auf einer Oberfläche der Straße während eines gegebenen Zeitrahmens erzeugtes akustisches Signal aufgezeichnet wird,

- eine Spektralleistungsdichte des akustischen Signals auf einem gegebenen Frequenzintervall bestimmt wird,
- das Frequenzintervall in eine Vielzahl von Frequenzbändern von vorher bestimmten Breiten segmentiert wird, und jedem Frequenzband ein Datum zugeordnet wird, das für eine durchschnittliche akustische Leistung repräsentativ ist, die in dem Frequenzband gemessen wird, wobei die repräsentativen Daten, die aus einer Messung hervorgehen, Variable eines der Messung zugeordneten Vektors bilden,
- ein Zustand der Straße und des Reifens entsprechend dem der durchgeführten Messung zugeordneten Vektor mit Hilfe einer Diskriminanzanalyse der Daten bestimmt wird, basierend auf einer Lernbasis, die von einer Gesamtheit von Vektoren gebildet ist, die vorher aufgezeichneten und durchgeführten Messungen zugeordnet sind, nach denselben Schritten wie oben, unter bekannten Fahrbedingungen nach Modalitäten, die jeweils einen gegebenen Zustand der Straße und des Reifens darstellen,

**dadurch gekennzeichnet, dass** die repräsentativen Daten, die die Variablen des einer Messung zugeordneten Vektors bilden, erhalten werden, wobei das Verhältnis zwischen der durchschnittlichen akustischen Leistung, die in einem Frequenzband gemessen wird, und einer akustischen Gesamtleistung, die auf dem gesamten Frequenzintervall gemessen wird, erstellt wird.

2. Verfahren nach Anspruch 1, bei dem die gemessene akustische Gesamtleistung gleich der Summe der durchschnittlichen akustischen Leistungen aller Frequenzbänder des betreffenden Frequenzintervalls ist.

3. Verfahren nach Anspruch 1 oder Anspruch 2, bei dem die Frequenzbänder bestimmt werden, wobei das Frequenzintervall durch Terzoktaven geschnitten wird.

4. Verfahren nach einem der Ansprüche 1 bis 3, bei dem der Zeitrahmen einer Messung kleiner oder gleich 0,5 Sekunden und vorzugsweise kleiner oder gleich 0,25 Sekunden ist.

5. Verfahren nach einem der Ansprüche 1 bis 4, bei dem das Frequenzintervall zwischen 0Hz und 20KHz liegt.

6. Verfahren nach einem der Ansprüche 1 bis 4, bei dem das Frequenzintervall zwischen 200Hz und 20KHz liegt.

7. Verfahren nach einem der Ansprüche 1 bis 6, bei dem eine Klasse von Modalitäten "Meteo", die von verschiedenen meteorologischen Zuständen der Straße gebildet ist, einen trockenen Zustand, einen nassen Zustand und einen feuchten Zustand umfasst.

8. Verfahren nach einem der Ansprüche 1 bis 7, bei dem eine Klasse von Modalitäten "Zustand des Belags", die von verschiedenen Zuständen des Straßenbelags gebildet ist, einen geschlossenen Zustand (f), einen mittleren Zustand (m) und einen offenen Zustand (o) umfasst.

9. Verfahren nach einem der Ansprüche 1 bis 8, bei dem eine Klasse von Modalitäten "Verschleiß", die von verschiedenen Verschleißzuständen des Reifens gebildet ist, einen neuen Zustand (N), einen halb abgenutzten Zustand (M) und einen abgenutzten Zustand (U) umfasst.

10. Verfahren nach einem der Ansprüche 1 bis 9, bei dem eine Klasse von Modalitäten "Skulptur", die von verschiedenen Typen von Reifenskulpturen gebildet ist, eine Skulptur vom Typ Sommer (P) und eine Skulptur vom Typ Winter (A) umfasst.

11. Verfahren nach einem der Ansprüche 1 bis 10, bei dem die Diskriminanzanalyse der Daten die folgenden Schritte vorsieht, während derer:

- auf Basis von Lernen ein reduzierte Diskriminanzraum bestimmt wird, in dem Zonen identifiziert werden, die von jeder Modalität oder Kombination von Modalitäten gebildet sind,
- der einer Messung in dem reduzierten Diskriminanzraum zugeordnete Vektor umgeformt und in Abhängigkeit von der Lokalisierung des Vektors der Messung eine Wahrscheinlichkeit nach jeder der Modalitäten (trocken, feucht, nass, geschlossen (f), offen (o), mittel (m), abgenutzt (U), halb abgenutzt (M), neu (N), Sommer (P), Winter (A)) oder Kombinationen von Modalitäten (ANf, ANm, ANo, AMf, AMm, AMo, AUf, AUm, AUo, PNf, PNm, PNo, PMf, PMm, PMo, PUf, PUm, PUo) zugeordnet wird,
- die wahrscheinlichste Modalität nach jeder der Klassen von Modalitäten ("Meteo", "Zustand des Belags", "Abnutzung", "Skulptur") bestimmt wird.

**12.** Verfahren nach Anspruch 11, bei dem der Messung eine Modalität nach der Modalität "Zustand des Belags", "Abnutzung" oder "Skulptur" zugeordnet wird, nachdem vorher bestimmt wurde, dass die Messung auf einer trockenen Straße durchgeführt wurde.

**13.** Verfahren nach Anspruch 12, bei dem:

- für jede der Modalitäten einer Klasse der Messung eine Wahrscheinlichkeit nach jeder der Kombinationen von Modalitäten, die diese Modalität enthält, zugeordnet wird,
- dieser Messung die Modalität der Klasse zugeordnet wird, die die höchste Wahrscheinlichkeit hat.

**14.** Verfahren nach Anspruch 13, bei dem eine Diagnose des Zustands des Reifens nach der Modalität "Abnutzung" oder der Modalität "Skulptur" durchgeführt wird, wobei die Resultate der in unterschiedlichen Zeitintervallen durchgeführten Messungen kombiniert werden.

**15.** Verfahren nach einem der Ansprüche 1 bis 14, bei dem das von dem Reifen (T) erzeugte akustische Signal mit Hilfe eines Mikrofons (1) gemessen wird, das in dem vorderen Teil einer Radpassage, die sich hinten am Fahrzeug (C) befindet, angeordnet ist.

**Claims**

**1.** Method of determining the condition of a road (G) and the condition of a tyre (T) fitted on a vehicle (C) travelling on said road, comprising steps in which:

- a measurement of a sound signal produced by the tyre running on a surface of the road during a given time frame is recorded,
- a spectral density of the power of the sound signal over a given frequency interval is determined,
- the frequency interval is segmented into a plurality of frequency bands of predetermined width, and each frequency band is associated with a data element representing a mean acoustic power measured in said frequency band, the representative data obtained from a measurement forming variables of a vector associated with said measurement,
- a condition of the road and of the tyre corresponding to the vector associated with the completed measurement is determined, by means of a discriminant analysis of the data using a learning base composed of a set of vectors associated with previously recorded measurements which have been made, by the same steps as those above, in known running conditions according to modalities which each represent a given condition of the road and the tyre,

**characterized in that** the representative data forming the variables of the vector associated with a measurement are obtained by finding the ratio between the mean acoustic power measured in a frequency band and a total acoustic power measured over the whole frequency interval.

**2.** Method according to Claim 1, wherein the total measured acoustic power is equal to the sum of the mean acoustic powers of all the frequency bands of the frequency interval concerned.

**3.** Method according to Claim 1 or Claim 2, wherein the frequency bands are determined by dividing the frequency interval into thirds of an octave.

**4.** Method according to any of Claims 1 to 3, wherein the time frame of a measurement is less than or equal to 0.5 seconds, and preferably less than or equal to 0.25 seconds.

**5.** Method according to any of Claims 1 to 4, wherein the frequency interval is in the range from 0 Hz to 20 kHz.

**6.** Method according to any of Claims 1 to 4, wherein the frequency interval is in the range from 200 Hz to 20 kHz.

**7.** Method according to any of Claims 1 to 6, wherein a class of "weather" modalities, composed of different meteorological conditions of the road, comprises a dry condition, a moist condition and a wet condition.

**8.** Method according to any of Claims 1 to 7, wherein a class of "surface condition" modalities, composed of different conditions of the road surface, comprises a closed condition (f), a medium condition (m) and an open condition (o).

9. Method according to any of Claims 1 to 8, wherein a class of "wear" modalities, composed of different conditions of wear of the tyre, comprises a new condition (N), a half-worn condition (M) and a worn condition (U).

10. Method according to any of Claims 1 to 9, wherein a class of "tread pattern" modalities, composed of different types of tyre tread pattern, comprises a summer pattern (P) and a winter pattern (A).

11. Method according to any of Claims 1 to 10, wherein the discriminant analysis of the data includes steps in which:

   - a reduced discriminant space is determined, using the learning base, and areas formed by each modality or combination of modalities are identified in this space,
   - the vector associated with a measurement is transformed in said reduced discriminant space, and, on the basis of the location of said vector, a probability is associated with the measurement according to each of the modalities (dry, moist, wet, closed (f), open (o), medium (m), worn (U), half-worn (M), new (N), summer (P), winter (A)) or combinations of modalities (ANf, ANm, ANo, AMf, AMm, AMo, AUf, AUm, AUo, PNf, PNm, PNo, PMf, PMm, PMo, PUf, PUm, PUo),
   - the most probable modality is determined according to each of the classes of modalities ("weather", "surface condition", "wear", "tread pattern").

12. Method according to Claim 11, wherein a modality according to the "surface condition" "wear", or "tread pattern" modality is associated with the measurement, after it has previously been determined that the measurement was made on a dry road.

13. Method according to Claim 12, wherein:

   - for each of the modalities of a class, a probability is associated with the measurement according to each of the combinations of modalities containing this modality,
   - and the modality of the class having the highest probability is attributed to this measurement.

14. Method according to Claim 13, wherein a diagnosis of the condition of the tyre is made according to the "wear" modality or the "tread pattern" modality, by combining the results of measurements made in different time intervals.

15. Method according to any of Claims 1 to 14, wherein the sound signal generated by the tyre (T) is measured by means of a microphone (1) placed in the front part of a wheel housing located at the rear of the vehicle (C).

**Fig 1**

Fig 2

Fig 3

**Fig 4**

**Fig 5**

Mesure signal sonore pendant une
trame temporelle

Détermination densité
spectrale normalisé

Application du modèle Météo
Détermination état Météo de la route

Sec — Non

Oui

Application du modèle
sculpture+usure+revetement
Sur sol sec

Classe
« sculpture »

Classe
« usure »

Classe
« revetement »

Cumul des mesures effectuées à des
intervalles différents

Diagnostic
état du pneu

**Fig 6**

**EP 3 084 418 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5586028 A